# EUROPÄISCHE PATENTANMELDUNG

(11) **EP 0 751 603 A1**
(43) Veröffentlichungstag der Anmeldung: **02.01.1997**
(21) Anmeldenummer: 95110128.6
(22) Anmeldetag: 27.06.1995
(51) Int. Cl.: H02J 15/00

(54) **Stromversorgungseinrichtung, insbesondere für elektrisch betriebene Messinstrumente**

(71) Anmelder: KUNDO SYSTEMTECHNIK GmbH, D-78112 St. Georgen (DE)
(72) Erfinder: Pfeiffer, Ulrich, D-78112 St. Georgen (DE)

(57) **Zusammenfassung**

Die Erfindung hat eine elektrische Stromversorgungseinrichtung, insbesondere für elektrisch betriebene Meßinstrumente zum Gegenstand, bei welcher durch eine Wärmequelle eine aus mehreren Thermoelementen bestehende Thermobatterie auf einer Seite erwärmt wird, während diese auf der anderen Seite auf einer niedrigeren, insbesondere der Raumluft entsprechenden Temperatur gehalten wird. Die dadurch aus der Thermobatterie entnehmbare elektrische Energie wird einem nachgeschalteten Verbraucher, insbesondere einem elektrisch betriebenen Meßinstrument, als Betriebsenergie zugeführt.

Hierbei wird die Wärmequelle durch einen zugeordneten gaskatalytischen Wärmeerzeuger (4) gebildet, der aus einem zugeordneten Gasspeicher (8) gespeist ist und der mit der Thermobatterie (1) in wärmeleitender Verbindung steht. Die Zuführung des Gasstromes zu der katalytischen Wärmequelle (4) soll durch den Expansionsdruck des Gasspeichers (8) erfolgen.

Gemäß einer zweckmäßigen Weiterbildung ist dieser derart ausgestalteten Stromversorgungseinrichtung ein elektrischer Energiespeicher (2o) zugeordnet, der von der Thermobatterie (1) geladen gehalten wird und wobei wenigstens zeitweise eine Speisung des nachgeordneten Verbrauchers über diesen elektrischen Energiespeicher (2o) erfolgt.

## Beschreibung

Die Erfindung betrifft eine Stromversorgungseinrichtung, insbesondere für elektrisch betriebene Meßinstrumente, wobei durch eine Wärmequelle eine aus mehreren Thermoelementen bestehende Thermobatterie auf einer Seite erwärmt wird, während diese auf der anderen Seite auf einer niedrigeren, insbesondere der Raumluft entsprechenden Temperatur gehalten und die aus der Thermobatterie entnehmbare elektrische Energie, insbesondere einem elektrisch betriebenen Meßinstrument als Betriebsenergie zugeführt wird. Die Erfindung ist jedoch nicht auf diesen Anwendungsbereich beschränkt, sondern kann auch in anderen Sachbereichen Verwendung finden.

Es ist Zweck der Erfindung, die Stromversorgung, insbesondere von elektrisch betriebenen Meßinstrumenten anstelle von ökologisch bedenklichen Trockenbatterien oder Kleinsammlern durch eine andere Gattung von elektrischen Stromquellen zu ersetzen.

Zur Bildung einer Stromquelle ist es bekannt, einen kleinen nuklearen Reaktor mit einer aus einer größeren Anzahl von einzelnen Thermoelementen bestehenden Thermobatterie zu paaren.

Hierbei wird diese Thermobatterie auf der einen Seite durch die Reaktorwärme beaufschlagt und auf der anderen Seite durch ein geeignetes Medium, z.B. die Raumluft, auf einer niedrigeren Temperatur gehalten.

Auf Grund des Temperaturunterschiedes wird in der Thermobatterie eine Spannung erzeugt, welche für geeignete Verbraucher zur Verfügung steht.
Der Aufwand für die nukleare Erwärmung ist erheblich und in strahlungstechnischer Hinsicht biologisch und ökologisch bedenklich. Die Kosten sind erheblich und die am Ausgang der nuklearen Stromquelle entnehmbare Versorgungsspannung ist verhältnismäßig gering.

Es ist erkennbar, daß diese Art von Stromversorgung für Kleinverbraucher, so insbesondere für elektrisch betriebene Meßinstrumente oder für elektronische Steuerschaltungen nur bedingt verwendbar ist. Als mobile, insbesondere tragbare Stromversorgung für die vorerwähnten Verbraucher, ist diese nukleare Stromquelle nicht geeignet, da das hohe Gewicht, die hohen Kosten und die strahlungstechnischen Probleme hier einer Anwendung entgegenstehen.
Aus diesem Grunde wurde diese bekannte nukleare Stromquelle nur in der Raumfahrt, insbesondere bei Satelliten eingesetzt, wo andere Bedingungen herrschen, welche der Anwendung einer derartigen Stromversorgung nicht im Wege stehen.

Der Erfindung liegt somit die Aufgabe zugrunde, eine Stromversorgungseinrichtung der einleitend zitierten Art zu schaffen, die es ermöglicht, ohne besonderen Aufwand, ohne hohe Kosten eine ausreichende Versorgungsspannung für die nachgeschalteten Verbraucher bereitzustellen.

Die Erfindung löst die gestellte Aufgabe dadurch, daß der Thermobatterie als Wärmequelle ein gaskatalytischer Wärmeerzeuger zugeordnet ist, der aus einem zugeordneten Gasspeicher gespeist ist, und daß der gaskatalytische Wärmeerzeuger mit der sogenannten "heißen Seite" der Thermobatterie in wärmeleitender Verbindung steht.

Hierbei ist gemäß einer zweckmäßigen Ausgestaltung der Erfindung vorgesehen, die Zuführung des Gasstromes zu dem gaskatalytischen Wärmeerzeuger durch den Expansionsdruck des Gasspeichers vorzunehmen.

Eine andere Ausgestaltung der Erfindung wird darin erblickt, daß der elektrischen Stromversorgungseinrichtung ein elektrischer Energiespeicher zugeordnet ist, der von der Thermobatterie geladen gehalten wird und daß wenigstens zeitweise eine Speisung des nachgeordneten Verbrauchers über diesen elektrischen Energiespeicher erfolgt.

Schließlich wird eine zweckmäßige Weiterbildung der Erfindung auch darin gesehen, daß die Thermobatterie durch ein Substrat aus Halbleiterwerkstoff gebildet ist, an dessen Oberfläche wenigstens eine Reihe von nebeneinander angeordneten, isolierten, dotierten Stegen des Halbleiterwerkstoffes mikrotechnologisch rasterartig aufgebracht sind,
und daß die einzelnen dotierten Stege mit ihren beiden Enden durch ebenfalls nach einem mikrotechnologischen Verfahren aufgebrachte Metallstege mit den
Enden der beiden jeweils benachbarten dotierten Stege zur Bildung einer eng gepackten Thermoelementen-Reihe verbunden sind.

Bezüglich weiterer Weiterbildungen und Ausgestaltungen der Erfindung wird auf die Unteransprüche verwiesen.

Die Erfindung hat eine Reihe von Vorteilen aufzuweisen.
So kann die Stromversorgungseinrichtung preiswert hergestellt werden, sie weist nur sehr geringen Raumbedarf auf und ist aus diesem Grunde vielseitig einsetzbar: Die Stromversorgungseinrichtung nach der Erfindung ist auch ökologisch unbedenklich, denn lediglich Wasserdampf und Kohlendioxyd fallen in geringen Mengen an.

Der erforderliche Gasbehälter ist austauschbar und stellt in verbrauchtem Zustand lediglich eine leere Metallhülse dar, welche jederzeit beim Wiedererwerb einer neuen Gaspatrone zur Wiederauffüllung oder aber auch zur Verwertung als Altstoff zurückgegeben werden kann.

Die Erfindung ist in Form von bevorzugten Ausführungsbeispielen in den beiliegenden Zeichnungen schematisch dargestellt und wird in der nachfolgenden Beschreibung im einzelnen erläutert.

Es stellen dar:
- Figur 1: die Stromversorgungseinrichtung nach der Erfindung in schematischer Darstellung als Blockschaltbild.
- Figur 2: ein Teilelement der Stromversorgungseinrichtung nach der Erfindung.
- Figur 3: eine Anwendungsform der Stromversorgungseinrichtung nach der Erfindung in schematischer Darstellung als Blockschaltbild.
- Figur 4: die Anwendungsform der Stromversorgungseinrichtung nach der Erfindung nach Figur 3 in schematischer konstruktiver Darstellung.

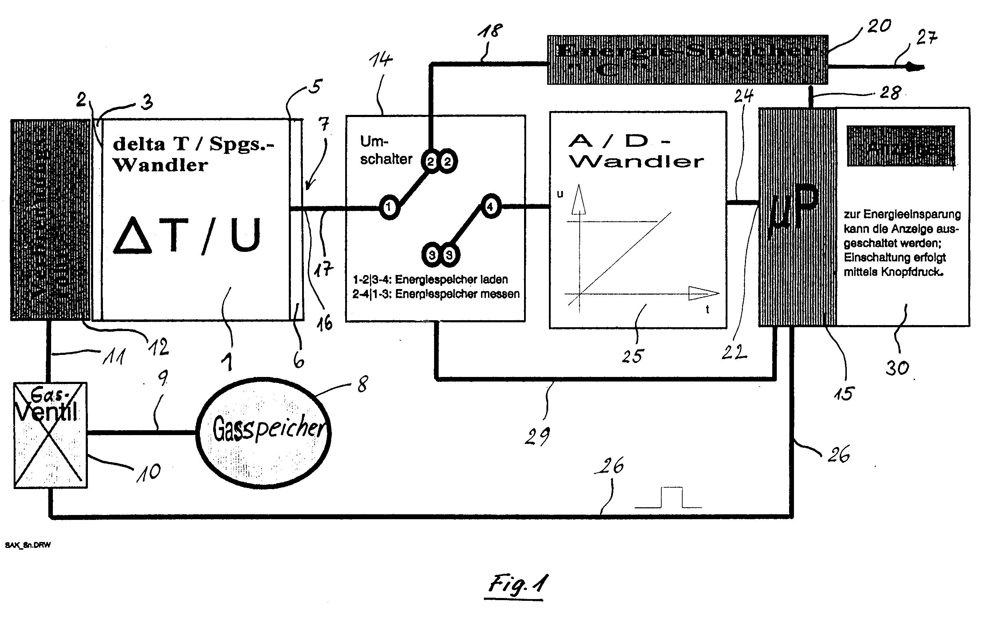

In Figur 1 ist die Stromversorgungseinrichtung nach der Erfindung schematisch dargestellt. Die ebenfalls schematisch angedeutete Thermobatterie 1 steht mit ihrer "heißen" Seite 2 über ein erstes wärmeleitendes Teil 3 mit dem gaskatalytischen Wärmeerzeuger 4 und mit ihrer "kalten" Seite 5 über ein zweites wärmeleitendes Teil 6 mit einem Medium 7 niedrigerer Temperatur, z.B. der Umluft, in Verbindung.

Von einem kleinen Druckgasbehälter 8, der ein geeignetes Katalytgas, z.B. Butan, Methan od.dgl., unter entsprechender Kompression enthält, wird das Katalytgas über die Zuleitung 9 und das Gasventil 1o sowie über die Zuleitung 11 dem katalytischen Wärmeerzeuger 4 zugeleitet. Das Gasventil 1o unterliegt elektrischer, vorzugsweise einer elektromagnetischen Betätigung, welche vom Mikrocomputer 15 über die Zuleitung 26 bedarfsweise steuerbar ist.

Der katalytische Wärmeerzeuger 4 wird bei eingeschaltetem, d.h. geschlossenem Gasventil 1o aus dem Druckgasbehälter 8 mit dem Katalytgas, z.B. Butan, Methan beströmt, wobei das Gas über feinporige keramische Strukturen von molekularer Größenordnung des Wärmeerzeugers 4, welche mit einem geeigneten Katalysator, z.B. Platin, bedeckt sind, geleitet wird. Es kommt so zu einer "kalten" katalytischen Verbrennung, die eine Erwärmung des Gehäuses 12 des Wärmeerzeugers 4 nach sich zieht. Der katalytische Wärmeerzeuger 4 hat zweckmäßig die Form einer runden Patrone, welche an einer Seite 13 in geeigneter Weise abgeflacht ist, um eine enge wärmeleitende Verbindung nach dem ersten wärmeleitenden Teil 3 zur Thermobatterie bilden zu können.
Das unter Druck vom Druckgasbehälter 8 über das Gasventil 1o nach dem katalytischen Wärmeerzeuger 4 geführte Gas durchströmt die sehr feinporigen keramischen Strukturen des katalytischen Wärmeerzeugers 4 nur sehr langsam und verbrennt hierbei unter Wirkung des an der katalytischen Umsetzung beteiligten Luftsauerstoffes zu Kohledioxyd und zu Wasser. Die hierbei am Gehäuse 12 entstehende Erwärmung ist beachtlich und bewirkt über das erste wärmeleitende Teil 3 eine Beeinflussung auf die Thermobatterie 1 mit der Wirkung einer deutlichen Erhöhung der Temperatur an der "heißen" Seite 2 der Thermobatterie 1,und zwar verglichen mit der Umlufttemperatur, die an der "kalten" Seite 5 der Thermobatterie 1 über das zweite wärmeleitende Teil 6 wirksam wird.

Die entstehende Temperaturdifferenz hat die Erzeugung einer entsprechenden Thermospannung am Ausgang 17 der Thermobatterie 1 zur Folge.
Diese Thermospannung wird über den elektrischen Umschalter 14 und die Zuleitung 18 dem elektrischen Energiespeicher 2o zugeführt, wobei ein entsprechender Ladestrom über diesen fließt.
Bei dem elektrischen Energiespeicher 2o kann es sich um einen geeigneten elektrischen Kondensator entsprechender Kapazität oder um einen elektrochemischen Sammler, z.B. einen Kleinstakkumulator (Knopfzelle etc.) handeln.

Durch den der Stromversorgungseinrichtung nach der Erfindung zugeordneten Mikrocomputer 15 erfolgt nun eine sequentielle Betätigung des zugeordneten Umschalters 14 mit dem Ziel, den Stromerzeugungsprozeß in geeigneter Weise zu steuern oder zu beeinflussen.

In einer ersten vom Mikroprozessor 15 sequentiell gesteuerten Schaltstellung des elektronischen Umschalters 14 wird die Zuleitung 18 des elektrischen Energiespeichers 2o von der Zuleitung 17 der Thermobatterie 1 abgetrennt und mit dem Eingang 21 des dem Mikrocomputer 15 vorgelagerten A/D-Wandlers 25 über die Zuleitung 23 verbunden. Dieser prüft den Ladezustand des elektrischen Energiespeichers 2o, z.B. auf der Grundlage einer Spannungsmessung der Ladespannung, wobei das digitale Meßergebnis dem Eingang 22 des Mikrocomputers 15 über die Zuleitung 24 übermittelt wird.

Wird hierbei ein nicht ausreichender Ladezustand des elektrischen Energiespeichers 2o festgestellt, so erfolgt über den Mikrocomputer 15 und über den elektronischen Umschalter 14 eine Rückschaltung des Energiespeichers 2o auf die Thermobatterie 1 vermittels der Zuleitungen 17 und 18.

Gleichzeitig wird vom Mikrocomputer 15 aus über die Zuleitung 26 das Gasventil 1o eingeschaltet, so daß Katalytgas vom Druckgasspeicher 8 über die Zuleitung 9, das Gasventil 1o und die Zuleitung 11 nach dem Wärmeerzeuger 4 strömt. Dieser wird erhitzt und über die Thermobatterie 1 wird über den schon beschriebenen Leitungsweg 17, 14, 18 der elektrische Energiespeicher 2o nach und nach aufgeladen.

Vom elektrischen Energiespeicher 2o aus wird der angeschlossene Verbraucher über die angedeutete Zuleitung 27 versorgt.

Als Verbraucher kommen elektrische Kleinverbraucher vielseitiger Art, insbesondere nach einem elektrischen Meßverfahren arbeitende Meßinstrumente und elektronische Steuerschaltungen in Frage.

Gemäß einer vorteilhaften Ausgestaltung der Erfindung sind die Bauelemente der Stromversorgungseinrichtung in einem zunächst nicht dargestellten Gehäuse zusammengefaßt. Hierbei kann das zweite Wärme leitende Teil 6 der Thermobatterie 1 mit dem z.B. aus Metall gefertigten Gehäuse in wärmeleitender Verbindung stehen, das seinerseits von der Umluft umströmt wird und deren Temperatur annimmt. Beide Temperaturwerte bilden durch ihre Differenz die Basis für die in der Thermobatterie 1 erzeugte Thermospannung.

Gemäß einer weiterführenden Ausgestaltung der Erfindung werden die Bauelemente der Stromversorgungseinrichtung mit denjenigen des Verbrauchers, z.B. eines nach einem elektrischen Meßverfahren arbeitenden Meßinstrumentes, baulich in einem gemeinsamen Gehäuse vereinigt.

Hierbei kann auch eine solche Ausgestaltung der Erfindung gewählt werden, daß Bauteile und Baugruppen beider Geräte teilweise gemeinsam Einsatz finden.

Dies gilt z.B. für den Mikrocomputer 15, der ohne weiteres sowohl für die Stromversorgungseinrichtung als solche, als auch für den zugeordneten Verbraucher, z.B. ein Meßinstrument, Verwendung finden kann, um die internen Steuervorgänge gemeinsam abzuwickeln.

Der Druckgasbehälter 8 wird vorteilhaft als eine handelsübliche, auswechselbare Patrone oder Kapsel ausgestaltet, welche in einer Wechselaufnahme am Gehäuse der Stromversorgungseinrichtung bzw. des Verbrauchers einsetzbar ist. Hierbei wird die Anordnung zweckmäßig so gewählt, daß beim Einsetzen der Patrone oder Kapsel diese selbsttätig geöffnet und mit der Zuleitung 9 nach Figur 1 automatisch verbunden wird.

Die als Druckgasspeicher 8 dienende Patrone oder Kapsel kann also als Energieträger in Form eines Massenartikels hergestellt und vertrieben werden und z.B. anstelle einer galvanischen Trockenbatterie zum Einsatz gelangen. Im Gegensatz zu dieser ist eine problemlose Entsorgung der leeren Gaspatrone möglich, da die verbrauchte Gaspatrone lediglich eine leere Hülse ohne jede chemische Komponente darstellt und als solche z.B. ohne weiteres zur Wiederauffüllung an der Verkaufsstelle zurückgenommen oder ggf. auch recycelt werden kann. Die Patrone oder Kapsel (8) kann sehr preiswert hergestellt und auch mit Gas nachgefüllt werden.

Eine sehr zweckmäßige Verwirklichung der Erfindung könnte z.B. bei einem elektronischen Quarzuhrwerk für elektronische Uhr vorgenommen werden. Die Bauelemente der Stromversorgungseinrichtung nach der Erfindung können zusammen mit den Teilen und Bauelementen des eigentlichen Quarzuhrwerkes in dem Uhrwerksgehäuse angeordnet werden, wobei auch Bauteile bzw. Baugruppen gemeinsam Verwendung finden können, so z.B. der Mikroprozessor 15.

Eine zweckmäßige Ausgestaltung der Uhr könnte auch darin bestehen, die Zeitanzeige digital auf einem Display (3o) zu vollziehen. Auch hier könnte z.B. die Ansteuerung der Anzeige 3o über den dann gemeinsamen Mikrocomputer 15 erfolgen.

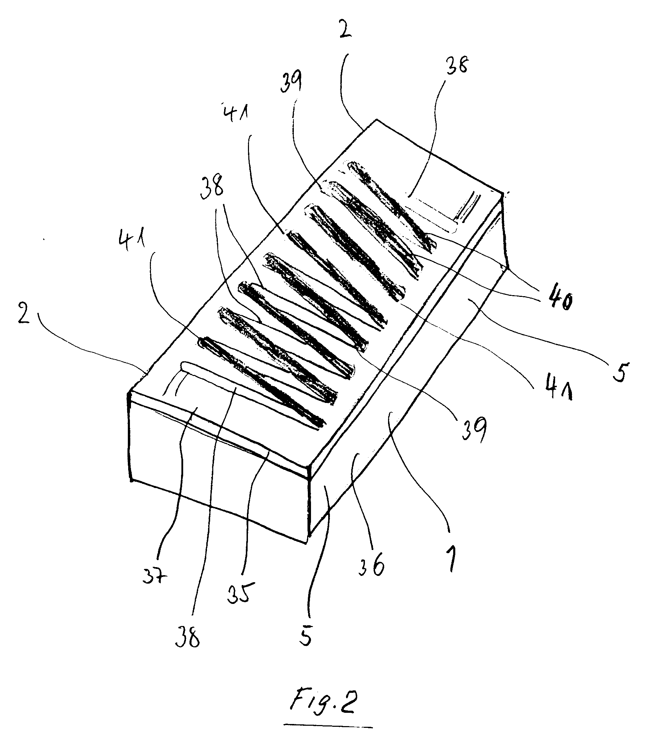

Gemäß einer vorteilhaften Ausgestaltung der Thermobatterie 1 wird diese durch ein Substrat 35 aus einem geeigneten Halbleiterwerkstoff, z.B. Silizium, gebildet und dieses nach einem mikrotechnologischen Verfahren bearbeitet, so wie dieses in Figur 2 dargestellt ist. Dieses Substrat 35 kann auch durch eine auf einem Träger 36 aus Saphir oder Quarz aufgedampfte Siliziumschicht 37 gebildet sein. Auf der Oberfläche des Siliziums sind nun parallele, nebeneinanderliegende, längliche, stegartige dotierte Siliziumbereiche 38 vorgesehen, welche ihrerseits gegen das Silizium isoliert ausgebildet sind.

Diese einzelnen, eng nebeneinander - bis zu 1ooo - auf dem Silizium aufgebrachten stegartigen dotierten Bereiche 38 sind nun mit ihren beiden Enden 39 durch Metallstege 4o mit den jeweils beiden entgegengesetzten Enden ihrer beiden beidseitig benachbarten, dotierten, stegartigen Bereiche 38 zur Bildung einer eng gepackten Thermoelementenreihe 41 der Thermobatterie 1 verbunden.
Diese Metallstege 4o können ebenfalls nach einem mikrotechnologischen Verfahren der Halbleitertechnik auf dem Silizium 37 aufgebracht werden.

Diese Form der Thermobatterie 1 hat den Vorteil einer verhältnismäßig hohen Thermogesamtspannung auf Grund der großen Anzahl von einzelnen Thermoelementen 41, welche bei relativ kleinen, noch akzeptierbaren Abmessungen zur Verfügung stehen.
Die erzielbare Nutzspannung beträgt einige Volt bei einer Temperaturdifferenz von 1o^{o}C.

Dieser Spannungswert reicht zur Versorgung von elektronischen Kleingeräten, so nach einem elektrischen Meßverfahren arbeitenden Meßinstrumenten, elektronischen Quaruhrwerken etc.

Der dem katalytischen Wärmeerzeuger zuzuführende Gasstrom, so z.B. Butangasstrom, wird bei der katalytischen Umsetzung in Kohlendioxyd und Wasser umgewandelt, bei gleichzeitiger thermischer Energieabgabe.
Um einen kondensierenden Niederschlag des Wasserdampfes im Gerät und um einen Überdruck bei dicht verschlossenen Gerätegehäusen zu vermeiden, werden vorteilhaft Lüftungsöffnungen - z.B. in Form von Perforationen - im Gehäuse vorgesehen, um eine gewisse Durchlüftung der Geräte zu gewährleisten. Diese Öffnungen werden zweckmäßig so ausgebildet, daß Insekten und Staub nicht in die Geräte eindringen können.

Gemäß einer weiteren zweckmäßigen Ausbildung ist nun vorgesehen, die zugeordnete Thermobatterie 1 sowohl als Spannungs- oder Stromquelle als auch als Temperatursonden oder Temperaturfühler zur Ermittlung einer Temperaturdifferenz zu verwenden, d.h. eine nach einem elektrischen Meßverfahren arbeitende Meßschaltung in die Stromversorgungseinrichtung nach der Erfindung zu integrieren bzw. umgekehrt.

Die Einrichtung nach der Erfindung kann so bevorzugt zweckmäßig als elektronischer Heizkosten- oder Warmwasserkostenverteiler ausgebildet werden, bei welchem die ermittelte Thermospannung nach der Multiplizierung mit für das Meßobjekt charakterisierenden Kenndaten über die Zeit integriert und das gewonnene Integral, welches einen empirischen Verbrauchswert bildet, auf einer Anzeige darstellbar ist.
Die Thermospannung ist Funktion der an der Thermobatterie 1 einwirkenden Temperaturdifferenz, somit kann die Thermobatterie 1 in Verbindung mit mit ihr verbundenen wärmeleitenden Teilen 3, 6 und bei Wahl einer geeigneten Anordnung als Temperatursonde bzw. Temperaturfühler des Heizkosten- oder Warmwasserkostenverteilers dienen. Diese Rechenvorgänge für die Verbrauchsermittlung können hierbei von dem systemeigenen Mikrocomputer 15 der Stromversorgungseinrichtung nach der Erfindung mit übernommen werden.
Ein solches Meßsystem bedürfte keines Austausches der Stromquelle und könnte zunächst praktisch zeitlich unbegrenzt an seinem Meßort zum Einsatz gelangen.

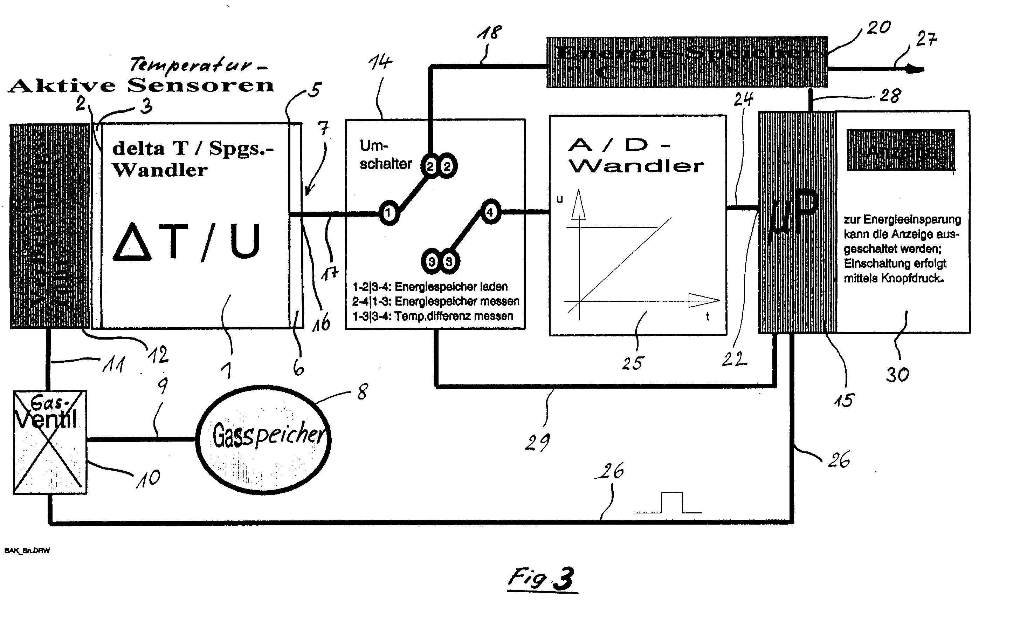

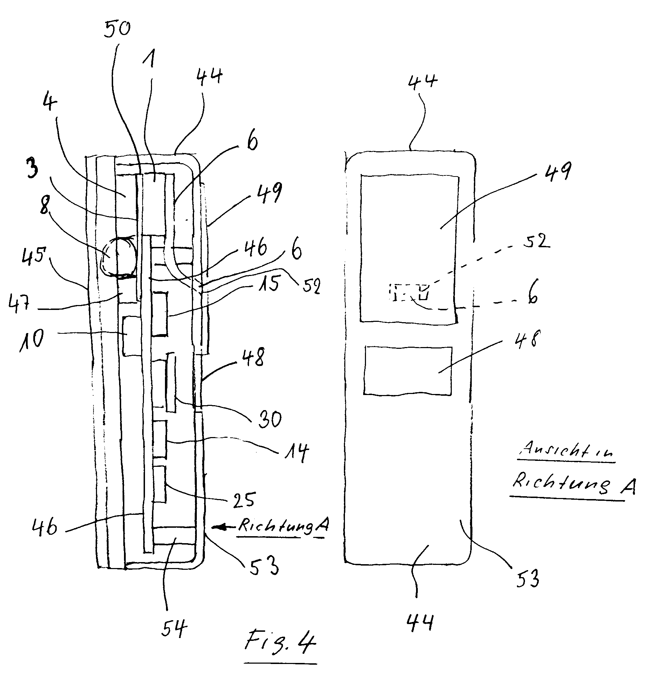

In den Figuren 3 und 4 der beigegebenen Zeichnungen ist nun eine derartige Ausführungsform der Erfindung chematisch dargestellt.

Figur 3 gibt das schematische Blockschaltbild des elektronischen Heizkosten- oder Warmwasserkostenverteilers nach der Erfindung wieder. Es ist erkennbar, daß beim elektronischen Umschalter 14, der über die Zuleitung 29 vom Mikrocomputer 15 steuerbar ist, wenigstens 3 mögliche Schaltstellungen vorgesehen sind, wobei
in der ersten Schaltstellung des Umschalters 14 zur Messung des Wärmeverbrauches die Thermobatterie 1 kurzzeitig mit dem Eingang 21 des A/D-Wandlers 25 verbunden ist und in dieser Schaltphase das elektrische Gasventil 1o durch den Mikrocomputer 15 getrennt gehalten ist, und
in der zweiten Schaltstellung des elektronischen Umschalters 14 zur Messung des Ladezustandes des Energiespeichers 2o dieser von der Thermobatterie 1 abgetrennt und mit dem Eingang 21 des A/D-Wandlers 25 verbunden ist, und wobei
in einer dritten Schaltstellung des Umschalters 14 die Thermobatterie 1 mit dem elektrischen Energiespeicher 2o zu dessen Aufladung verbunden ist und daß in dieser Schaltstellung je nach dem Wert, der in der ersten Schaltstellung ermittelten Thermospannung das elektrische Gasventil 1o durch den Mikrocomputer 15 entweder geschlossen oder getrennt gehalten und so die gaskatalytische Wärmequelle 4 ein- oder ausgeschaltet ist.

Es ist ferner dem auch hier von dem elektrischen Energiespeicher 2o über die Zuleitung 28 gespeisten Mikrocomputer 15 eine - vorzugsweise - digitale Anzeige 3o unmittelbar nachgeordnet, auf welcher die in einem der Speicher des Mikrocomputers 15 abgelegten, von letzterem ermittelten Verbrauchswerte, z.B. durch Knopfdruck darstellbar sind.

Die Betreibung der Thermobatterie 1 erfolgt also bei dem elektronischen Heizkosten- oder Warmwasserkostenverteiler gemäß der Erfindung sowohl durch das Meßobjekt, also beispielsweise einen Heizkörper, als auch - bedarfsweise - durch den gemäß der Erfindung zugeordneten gaskatalytischen Wärmeerzeuger 4.

In Figur 4 ist eine konstruktive Ausführungsform eines elektronischen Heizkostenverteilers nach der Erfindung schematisch dargestellt.

In dem durch die Abdeckung 53 und das Adapterteil 45 gebildeten Gehäuse 44 ist die Thermobatterie 1 zwischen dem ersten und dem zweiten wärmeleitenden Teil 3, 6 angeordnet.

Außen an dem ersten wärmeleitenden Teil 3, das nach unten verlängert ist und dort das Kontaktstück 47, ebenfalls aus einem wärmeleitenden Werkstoff trägt, ist der katalytische Wärmeerzeuger 4 angebracht.

Dieser wird durch das Gasventil 1o mit aus dem Gasspeicher 8 strömendem Brenngas (Butan, Methan, Stadtgas) beschickt, wodurch in diesem gaskatalytisch zusätzlich Wärmeenergie erzeugt wird, falls dies erforderlich sein sollte.

Das Adapterteil 45 des Gehäuses 44 ist unmittelbar mit dem zu erfassenden Heizkörper verbunden, der als solcher nicht dargestellt ist. Dadurch wird bei erwärmtem Heizkörper die Thermobatterie 1 über das Kontaktstück 47 und das erste wärmeleitende Teil 3 ebenfalls mit Wärmeenergie versorgt, so daß die Thermobatterie 1 indirekt über den Heizkörper erwärmt wird.

Die Thermobatterie 1 ist andererseits durch das zweite wärmeleitende Teil 6 über einen Durchbruch 52 in der Abdeckung 53 mit der metallenen Frontplatte 49 wärmeleitend verbunden, welche außen auf der Abdeckung 53 angebracht ist und von der den Heizkostenverteiler umgebenden Umluft umströmt wird. Die Umlufttemperatur wird so über die Frontplatte 49 und das Teil 6 auf die Thermobatterie 1 übertragen, so daß an dieser die Temperaturdifferenz zwischen Heizkörper und Umluft wirksam wird und die dadurch entstehende Thermospannung durch die Meßschaltung 14, 25, 15, 3o (Figur 3) zu einer Verhältniszahl des Verbrauchswertes verarbeitet werden kann.

Die Thermobatterie 1 ist durch das erste wärmeleitende Teil 3 zusammen mit dem Gasspeicher 8 und dem katalytischen Wärmeerzeuger 4 sowie dem Kontaktstück 47 an der gedrucken Leiterplatte 46 des Heizkostenverteilers gehaltert, welche ihrerseits über Säulen 54, 55 mit der Abdeckung 53 des Gehäuses 44 verbunden ist und von dieser getragen wird.

Auf der gedruckten Leiterplatte 46 sind neben dem Gasventil 1o insbesondere der Mikrocomputer 15, der elektronische Umschalter 14, der A/D-Wandler 25 sowie die Anzeige 3o angebracht; letztere kann durch das Sichtfenster 48 der Abdeckung 53 hindurch abgelesen werden.

Weitere Schaltelemente, wie z.B. die zur Speicherung spezifischer Heizkörper-Kenndaten notwendige Eingabevorrichtung für den Mikrocomputer 15 sind nicht dargestellt. Sie sind üblicherweise ebenfalls auf der gedruckten Leiterplatte 46 angeordnet und entsprechen dem Stande der Technik.

Das Kontaktstück 47 des ersten wärmeleitenden Teiles 3 steht unmittelbar - vorzugsweise federnd - mit dem Adapterteil 45 in wärmeleitender Verbindung, um einen guten Wärmeübergang zu gewährleisten.

Die elektronische Schaltungsanordnung des Heizkostenverteilers nach Figur 4 wird also in der Regel allein schon durch die Wärmeenergie des Heizkörpers über die Thermobatterie ausreichend mit elektrischer Energie versorgt.
Der gaskatalytische Wärmeerzeuger 4 wird somit nur übergangsweise, z.B. während Phasen geringer Heizleistung, zur Stromversorgung der elektronischen Schaltungsanordnung des Heizkostenverteilers beitragen.

Der damit verbundene geringe Gasverbrauch hat eine sehr lange Betriebsdauer für eine Patrone des Gasspeichers 8 zur Folge.

Gemäß einer zweckmäßigen erfinderischen Ausgestaltung des Heizkostenverteilers nach den Figuren 3 und 4, sind die Bauteile: wärmeleitendes Teil 3 mit Kontaktstück 47, katalytischer Wärmeerzeuger 4 und Thermobatterie 1 zu einer separaten Baugruppe 5o zusammengefaßt, welche als solche z.B. an der gedruckten Leiterplatte 46 aufmontiert ist.

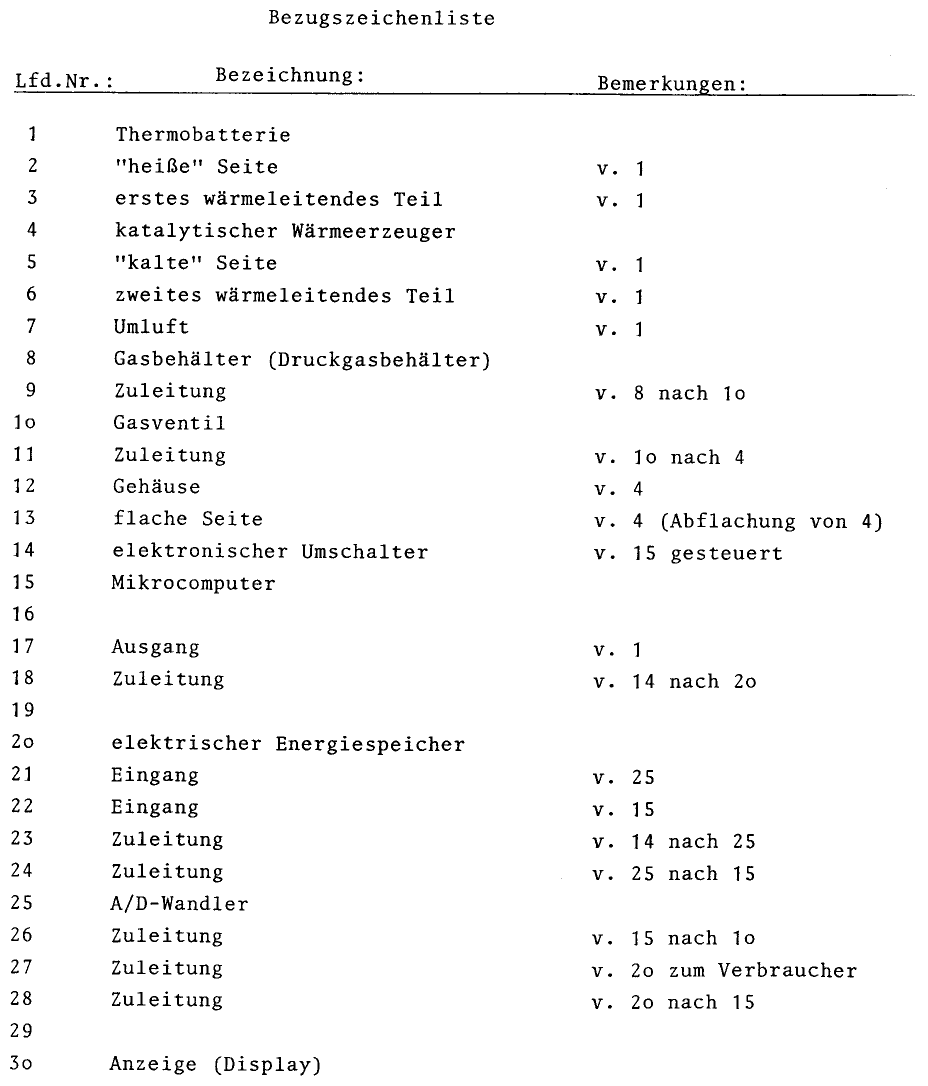

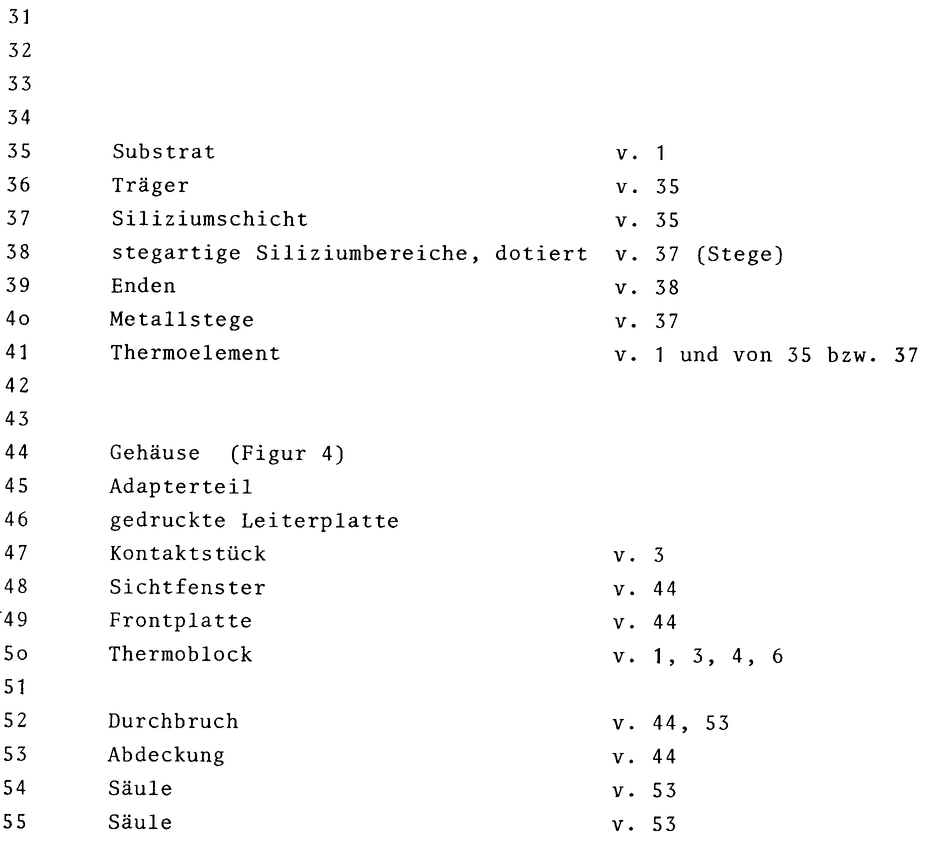

## Patentansprüche

1. Elektrische Stromversorgungseinrichtung, insbesondere für elektrisch betriebene Meßinstrumente, wobei durch eine Wärmequelle eine aus mehreren Thermoelementen bestehende Thermobatterie auf einer Seite erwärmt wird, während diese auf der anderen Seite auf einer niedrigeren, insbesondere der Raumluft entsprechenden Temperatur gehalten und die aus der Thermobatterie entnehmbare elektrische Energie dem nachgeschalteten Verbraucher, insbesondere einem elektrisch betriebenen Meßinstrument als Betriebsenergie zugeführt wird,
dadurch gekennzeichnet,
daß der Thermobatterie als Wärmequelle ein gaskatalytischer Wärmeerzeuger (4) zugeordnet ist, der aus einem zugeordneten Gasspeicher (8) gespeist ist.

2. Elektrische Stromversorgungseinrichtung nach Anspruch 1,
dadurch gekennzeichnet,
daß der gaskatalytische Wärmeerzeuger (4) mit der Thermobatterie (1) in wärmeleitender Verbindung steht, und daß die Zuführung des Gasstromes zu der katalytischen Wärmequelle (4) durch den Expansionsdruck des Gasspeichers (8) erfolgt.

3. Elektrische Stromversorgungseinrichtung nach Anspruch 1,
dadurch gekennzeichnet,
daß der Stromversorgungseinrichtung ein elektrischer Energiespeicher (1o) zugeordnet ist, der von der Thermobatterie (1) geladen gehalten wird und daß wenigstens zeitweise eine Speisung des nachgeordneten Verbrauchers über diesen elektrischen Energiespeicher (2o) erfolgt.

4. Elektrische Stromversorgungseinrichtung nach Anspruch 1,
durch gekennzeichnet,
daß die Thermobatterie (1) durch ein Substrat (35) aus Halbleitermaterial gebildet ist, an dessen Oberfläche (37) wenigstens eine Reihe von nebeneinander angeordneten, isolierten, dotierten Stegen des Halbleiterwerkstoffes mikrotechnologisch, rasterartig aufgebracht sind und daß die einzelnen dotierten Stege (38) mit ihren beiden Enden (39) durch ebenfalls nach einem mikrotechnologischen Verfahren aufgebrachte Metallstege (4o) mit den Enden (39) der beiden jeweils benachbarten dotierten Stege (38) zur Bildung einer eng gepackten Thermoelementenreihe verbunden sind.

5. Elektrische Stromversorgungseinrichtung nach Anspruch 1,
dadurch gekennzeichnet,
daß der Gasstrom vom Gasspeicher (8) zu dem gaskatalytischen Wärmeerzeuger (4) durch ein elektrisch steuerbares Gasventil (1o) dann freigebbar ist, wenn der Ladezustand des elektrischen Speichers (2o) unter einen bestimmten Mindestwert abgesunken ist.

6. Elektrische Stromversorgungseinrichtung nach Anspruch 5,
dadurch gekennzeichnet,
daß der gaskatalytische Wärmeerzeuger (4), das elektrische Gasventil (1o) und der Gasspeicher (8) mit im Gehäuse der Stromversorgungseinrichtung angeordnet sind.

7. Elektrische Stromversorgungseinrichtung nach Anspruch 1,
dadurch gekennzeichnet,
daß der Gasspeicher (8) als eine auswechselbare handelsübliche Gaspatrone (8) ausgebildet ist, welche in eine Wechselaufnahme im Gehäuse der Stromversorgungseinrichtung eingesetzt ist.

8. Elektrische Stromversorgungseinrichtung nach Anspruch 5,
dadurch gekennzeichnet,
daß die Überwachung des Speicherzustandes des elektrischen Energiespeichers (2o) auf seinen Ladezustand durch eine der Schaltungsanordnung (1, 1o, 14, 15) der Stromversorgungseinrichtung zugeordnete elektrische Überwachungsschaltung (25) erfolgt.

9. Elektrische Stromversorgungseinrichtung nach Anspruch 5 oder 8,
dadurch gekennzeichnet,
daß die Steuerung der Überwachungsschaltung (25) und die Steuerung des den Gaszustrom zum gaskatalytischen Wärmeerzeuger (4) vornehmenden elektrischen Gasventiles (1o) durch einen zugeordneten Mikrocomputer (15) erfolgt.

10. Elektrische Stromversorgungseinrichtung nach Anspruch 8,
dadurch gekennzeichnet,
daß die elektronische Überwachungsschaltung für den elektrischen Energiespeicher (2o) eine Spannungsüberwachungsschaltung (25) ist.

11. Elektrische Stromversorgungseinrichtung nach Anspruch 1o,
dadurch gekennzeichnet,
daß die Spannungsüberwachungsschaltung für den elektrischen Energiespeicher (2o) ein dem Mikrocomputer (15) vorgeschalteter elektronischer A/D-Wandler (25) ist.

12. Elektrische Stromversorgungseinrichtung nach Anspruch 9,
dadurch gekennzeichnet,
daß durch den zugeordneten Mikrocomputer (15) ein elektronischer Umschalter (14) steuerbar ist.

13. Elektrische Stromversorgungseinrichtung nach Anspruch 12,
dadurch gekennzeichnet,
daß in einer ersten vom Mikrocomputer (15) vorgegebenen Schaltstellung des elektronischen Umschalters (14) zur Messung der Ladespannung des elektrischen Energiespeichers (2o) dieser von der Thermobatterie (1) abgetrennt und mit dem Eingang (21) des A/D-Wandlers (25) verbunden ist und daß nötigenfalls in dieser Schaltstellung gleichzeitig das elektrische Gasventil (1o) getrennt gehalten ist und der Gaszustrom zum gaskatalytischen Wärmeerzeuger (4) unterbunden ist.

14. Elektrische Stromversorgungseinrichtung nach Anspruch 13,
dadurch gekennzeichnet,
daß in einer zweiten Schaltstellung des elektronischen Umschalters (14) der elektrische Energiespeicher (2o) von dem Eingang (21) des A/D-Wandlers (25) abgetrennt und an die Thermobatterie (1) angeschaltet ist und daß in dieser Schaltstellung nötigenfalls das elektrische Gasventil (1o) geschlossen gehalten und der Gasstrom zum gaskatalytischen Wärmeerzeuger (4) eingeleitet ist.

15. Elektrische Stromversorgungseinrichtung nach Anspruch 3,
dadurch gekennzeichnet,
daß der elektrische Energiespeicher (2o) als ein Kondensator ausgebildet ist.

16. Elektrische Stromversorgungseinrichtung nach Anspruch 3,
dadurch gekennzeichnet,
daß der elektrische Energiespeicher (2o) als ein elektrochemischer Speicher ausgebildet ist.

17. Elektrische Stromversorgungseinrichtung nach Anspruch 1,
dadurch gekennzeichnet,
daß die Thermobatterie (1) einerseits durch ein erstes wärmeleitendes Verbindungsstück (3) mit dem gaskatalytischen Wärmeerzeuger (4) verbunden ist und daß die Thermobatterie (1) andererseits durch ein zweites wärmeleitendes Verbindungsstück (6) mit einem Medium niedrigerer Temperatur, so der Umluft, verbunden ist.

18. Elektrische Stromversorgungseinrichtung nach Anspruch 17,
dadurch gekennzeichnet,
daß das die Thermobatterie (1) mit der Umlufttemperatur verbindende zweite wärmeleitende Verbindungsstück (6) mit einem wärmeleitenden Teil (49) des Gehäuses (44) der Stromversorgungseinrichtung in Verbindung steht.

19. Elektrische Stromversorgungseinrichtung nach Anspruch 18,
dadurch gekennzeichnet,
daß das zweite wärmeleitende Verbindungsstück (6) teilweise durch das Gehäuse (44) gebildet ist.

20. Elektrische Stromversorgungseinrichtung
nach einem der Ansprüche 1 - 19,
dadurch gekennzeichnet,
daß die Bauelemente der Stromversorgungseinrichtung mit denjenigen des nach einem elektrischen Meßverfahren arbeitenden Meßinstrumentes baulich vereinigt sind.

21. Elektrische Stromversorgungseinrichtung nach Anspruch 2o,
dadurch gekennzeichnet,
daß die Bauelemente der Stromversorgungseinrichtung mit denjenigen des nach einem elektrischen Meßverfahren arbeitenden Meßinstrumentes in einem gemeinsamen Gehäuse (44) angeordnet sind.

22. Elektrische Stromversorgungseinrichtung nach Anspruch 1,
dadurch gekennzeichnet,
daß der Gasspeicher (8) ein Butangasspeicher ist.

23. Elektrische Stromversorgungseinrichtung nach Anspruch 1,
dadurch gekennzeichnet,
daß der gaskatalytische Wärmeerzeuger (4) rohrförmig ausgebildet ist.

24. Elektrische Stromversorgungseinrichtung nach Anspruch 1,
dadurch gekennzeichnet,
daß in dem Gehäuse (44) der Stromversorgungseinrichtung der Durchlüftung des Gehäuseinneren dienende Öffnungen vorgesehen sind.

25. Elektrische Stromversorgungseinrichtung nach Anspruch 24,
dadurch gekennzeichnet,
daß die Öffnungen im Gehäuse (44) durch Perforationen in einer oder mehrerer der Gehäusewände gebildet sind.

26. Elektrische Stromversorgungseinrichtung nach
einem der Ansprüche 9, 11 - 13 und nach Anspruch 2o,
dadurch gekennzeichnet,
daß der Mikrocomputer (15) für die Schaltungsanordnung der Stromversorgungseinrichtung ein Mikrocomputer des nach einem elektrischen Meßverfahren arbeitenden Meßinstrumentes ist.

27. Elektrische Stromversorgungseinrichtung nach Anspruch 2o,
dadurch gekennzeichnet,
daß das mit der Stromversorgungseinrichtung vereinigte, nach einem elektrischen Meßverfahren arbeitende Meßinstrument ein elektronisches Quarzuhrwerk einer elektrischen Uhr ist.

28. Elektrische Stromversorgungseinrichtung nach Anspruch 2o,
dadurch gekennzeichnet,
daß das mit der Stromversorgungseinrichtung vereinigte, nach einem elektrischen Meßverfahren arbeitende Meßinstrument ein tragbares Gerät ist.

29. Elektrische Stromversorgungseinrichtung nach Anspruch 2o oder 21,
dadurch gekennzeichnet,
daß die Thermobatterie (1) sowohl als Stromquelle als auch als thermische Meßfühler zur Ermittlung einer Temperaturdifferenz dient.

30. Elektrische Stromversorgungseinrichtung nach Anspruch 29,
dadurch gekennzeichnet,
daß die Stromversorgungseinrichtung zusammen mit dem mit ihr vereinigten, nach einem elektrischen Meßverfahren arbeitenden Meßinstrument als ein elektronisches Differenzthermometer ausgebildet ist.

31. Elektrische Stromversorgungseinrichtung nach Anspruch 29 oder 3o,
dadurch gekennzeichnet,
daß diese zusammen mit einer mit ihr vereinigten, als integrierender Spannungsmesser ausgebildeten elektronischen Meßeinrichtung als elektronischer Heizkosten- oder Warmwasserkostenverteiler ausgebildet ist, wobei durch die elektronische Meßschaltung (14, 15, 25) die jeweils ermittelte Thermospannung der Thermobatterie (1) nach der Multiplizierung mit den Kenndaten des Meßobjektes über die Zeit integrierbar und das sich ergebende Integral in Form eines Verhältniswertes auf einer Anzeige (3o) darstellbar ist.

32. Elektrische Stromversorgungseinrichtung nach Anspruch 31,
dadurch gekennzeichnet,
daß durch den systemeigenen Mikrocomputer (15) der zugeordnete und von letzterem steuerbare elektronische Umschalter (14) sequentiell betätigbar ist, derart,
daß in einer ersten Schaltstellung des Umschalters (14) zur Messung des Wärmeverbrauchs die Thermobatterie (1) kurzzeitig mit dem Eingang (21) des A/D-Wandlers (25) verbunden ist und in dieser Schaltphase das elektrische Gasventil (1o) durch den Mikrocomputer (15) getrennt gehalten ist,
daß in einer zweiten Schaltstellung des elektronischen Umschalters (14) zur Messung des Ladezustandes des Energiespeichers (2o) dieser von der ihn speisenden Thermobatterie (1) abgetrennt und mit dem Eingang (21) des A/D-Wandlers (25) verbunden ist und daß nötigenfalls in einer dritten Schaltstellung des Umschalters (14) die Thermobatterie (1) mit dem elektrischen Energiespeicher (2o) zu dessen Aufladung verbunden ist und daß in dieser Schaltstellung des Umschalters (14) - je nach dem Wert der in der ersten Schaltstellung ermittelten Thermospannung - das elektrische Gasventil (1o) durch den Mikrocomputer (15) entweder geschlossen oder getrennt gehalten und so der gaskatalytische Wärmeerzeuger (4) ein- oder ausgeschaltet ist.
